# EUROPÄISCHE PATENTSCHRIFT

(11) **EP 1 555 709 B1**
(45) Veröffentlichungstag und Bekanntmachung des Hinweises auf die Patenterteilung: **26.11.2008**
(21) Anmeldenummer: 04029676.6
(22) Anmeldetag: 13.12.2004
(51) Int. Cl.: H01M 8/12, H01M 8/04

(54) **Verfahren und Vorrichtung zum Betreiben eines Energiewandlers**
Process and device for energy conversion
Procédé et dispositif pour la conversion d'enérgie

(30) Priorität: 15.01.2004 DE 102004002361
(43) Veröffentlichungstag der Anmeldung: 20.07.2005
(73) Patentinhaber: Behr GmbH & Co. KG, 70469 Stuttgart (DE)
(72) Erfinder: Angermann, Hans-Heinrich, Dr. rer. nat, 70197 Stuttgart (DE); Burk, Roland, Dipl.-Phys., 70469 Stuttgart (DE)

(56) Entgegenhaltungen:
- DE-A1- 10 307 112
- US-A1- 2005 142 398
- US-B1- 6 541 141

## Beschreibung

Die vorliegende Erfindung bezieht sich auf ein Verfahren und eine Vorrichtung zum Betreiben eines Energiewandlers. Die Erfindung wird in Bezug auf eine Brennstoffzelle beziehungsweise eine Vielzahl von Brennstoffzellen beschrieben, welche als Energiewandler dienen. Es ist jedoch auch möglich, die folgende Erfindung auf andere Arten von Energiewandlern anzuwenden.

Bei Brennstoffzellen beziehungsweise Brennstoffelementen handelt es sich um elektrische Stromquellen, in der durch elektrochemische Oxidation einer leicht oxidierbaren Substanz mit Sauerstoff chemische Energie direkt in elektrische Energie umgewandelt werden kann. Dabei besteht eine Brennstoffzelle im Prinzip aus zwei katalytisch wirksamen porösen - und deshalb für die Reaktionsprodukte durchlässigen - Metallen oder metallisch beschichteten Kohleelektroden, zwischen denen sich ein Elektrolyt befindet. Nach der Arbeitstemperatur unterscheidet man zwischen Nieder-, Mittel- und Hochtemperatur-Brennstoffzellen. Bei letzteren, in Bezug auf welche die vorliegende Erfindung beschrieben wird, liegt eine Arbeitstemperatur zwischen 500 und 1100 Grad Celsius vor. Eine Gattung derartiger Hochtemperatur-Brennstoffzellen sind sogenannte Solid Oxide Fuel Cell (SOFC)-Brennstoffzellen.

Um die Brennstoffzellentechnik für die Stromerzeugung nutzbar machen zu können, werden in der Praxis mehrere Zellen zusammengeschaltet. Zu diesem Zweck ist neben den für die Brennstoffzelle vorgesehenen Elektroden üblicherweise noch eine weitere Einrichtung vorgesehen, nämlich eine sogenannte Interkonnektor-Platte. Diese Platte bildet dabei ein Verbindungsglied zwischen den Einzelzellen und wirkt daneben auch als tragende Komponente der Zelle.

Für diese Interkonnektorplatten der Brennstoffzelle und für die die Brennstoffzelle umgebenden Wärmeüberträger werden, unter - anderem aus Kostengründen - ferritische Edelstähle herangezogen. Aufgrund der in der Brennstoffzelle und in den diese umgebenden Wärmeüberträgern vorherrschenden hohen Temperaturen, tritt jedoch auf der Seite der Elektroden - zumindest auf der Seite der Kathode - in normaler Luft eine Abdampfung von Chrom(Cr)-Verbindungen auf, welche zu hohen elektrischen Verlusten in der SOFC-Zelle führen kann.

Im Stand der Technik sind verschiedene Möglichkeiten bekannt, diese Abdampfung von Cr-Verbindungen zu reduzieren.

So wird in der DE 100 25 108 A1, vorgeschlagen, einen Edelstahl zu verwenden, der speziell - insbesondere mit erhöhten Gehalten an Mangan (Mn) - legiert ist. Auf diese Weise wird erreicht, dass sich die auf konventionellen Edelstählen vorliegende Cr₂O₃-Oberfläche nicht mehr ausbildet, sondern eine MnCr₂O₄-Spinellphase. Diese Spinellphase weist gegenüber einer Cr₂O₃-Oberfläche verringerte Chromabdampfraten auf. Trotz des hierdurch erreichten verbesserten Verhaltens bezüglich der Chromabdampfraten, kommt es jedoch im Langzeitbetrieb immer noch zu Leistungsverlusten in der Zelle, da gleichwohl ein Abdampfen von Chrom auftritt.

Eine weitere aus dem Stand der Technik bekannte Möglichkeit besteht darin, die Edelstähle mit Schutzschichten, beispielsweise einer Peroxid-Schutzschicht, zu überziehen. Auf diese Weise werden die Chromabdampfraten um einen Faktor, der größer als 100 ist, reduziert. Der Nachteil ist jedoch, dass die Auftragung der Peroxidschichten relativ aufwendig ist, damit zu einer Erhöhung der Kosten führt und die Schutzschichten andererseits prinzipiell immer das Risiko in sich tragen, abzuplatzen.

Eine weitere Möglichkeit besteht darin, aluminiumhaltige, α-Al₂O₃-Schutzschichten ausbildende Nickelbasislegierungen zu verwenden, die jedoch für den Hochtemperatureinsatz wesentlich teurer sind als Edelstähle.

Der vorliegenden Erfindung liegt somit die Aufgabe zugrunde, die Chrom(Cr)-Abdampfraten in der SOFC-Brennstoffzelle - und bevorzugt auch in den diese umgebenden Komponenten, wie Wärmetauschern, Anodengasnachverbrennern usw. - zu reduzieren. Dabei soll die Reduzierung kostengünstig erfolgen.

Dies wird erfindungsgemäß durch den Gegenstand des Anspruchs 1 sowie den Gegenstand des Anspruchs 12 erreicht. Vorteilhafte Ausführungsformen sind Gegenstand der Unteransprüche.

Bei dem erfindungsgemäßen Verfahren zum Betreiben eines Energiewandlers, insbesondere einer Brennstoffzelle, welche wenigstens eine erste und eine zweite Elektrode aufweist, wird die Brennstoffzelle mit wenigstens einem ersten Medium, welches einen Brennstoff sowie wenigstens mit einem zweiten Medium, welches Umgebungsluft enthält, beschickt. Dabei wurde wenigstens eine thermodynamische Kenngröße wenigstens eines Mediums vor dem Beschicken der Brennstoffzelle derart beeinflusst, dass ihr Wert in einem vorgegebenen Bereich liegt. Dabei werden unter thermodynamischer Kenngröße nicht nur die Zustandsgrößen im engeren Sinn verstanden, sondern auch die physikalischen Eigenschaften einer Substanz beeinflussenden Größe, wie die relative Feuchte, der absolute Wassergehalt und dergleichen.

Der vorgegebene Bereich muss dabei nicht absolut festgelegt sein, sondern steht in einer vorgegebenen Beziehung zu dem Bereich, in dem der Wert der Zustandsgröße vor der Beeinflussung lag.

Unter einer Beeinflussung vor dem Beschicken ist zu verstehen, dass die Variation sowohl zeitlich vor dem Beschicken der Brennstoffzelle vorgenommen wird, als auch örtlich auf dem Strömungspfad des Mediums vor der Brennstoffzelle.

Die Variation des wenigstens einen Parameters besteht in einer Absenkung der relativen Feuchte eines Mediums.

Im Gegensatz zu den obengenannten Verfahren wird also bei dem erfindungsgemäßen Verfahren nicht versucht, eine Verringerung der Abdampfung von Chromverbindungen dadurch zu erreichen, dass auf das Material der Interkonnektorplatte oder weiterer Komponenten Einfluss genommen wird, sondern vielmehr wird im Gegensatz zum Stand der Technik auf wenigstens eines der Medien, mit welchen die Brennstoffzelle beschickt wird, Einfluss genommen.

Unter einem Beschicken wird verstanden, dass das erste beziehungsweise das zweite Medium in irgendeiner Weise auf die Brennstoffzelle beziehungsweise die jeweiligen Elektroden aufgebracht wird. Dies kann dadurch geschehen, dass die Medien unter einem vorgegebenen Druck auf die jeweiligen Elektroden, zwischen denen ein Elektrolyt vorgesehen ist, auftreffen.

Die Änderung der relativen Feuchte des Mediums kann auch beispielsweise durch Einsatz einer Trocknerkartusche erfolgen oder auch durch Abkühlung des Mediums, wie nachfolgend erläutert wird.

Bei einer bevorzugten Ausführungsform ist das Medium, dessen thermodynamische Kenngröße geändert wurde, gasförmig, und besonders bevorzugt Umgebungsluft. Dabei wird die Umgebungsluft angesaugt und auf die Brennstoffzelle aufgebracht. Genauer gesagt, wird bevorzugt die Kathode der Brennstoffzelle mit der Umgebungsluft beschickt.

In einer weiteren bevorzugten Ausführungsform ist wenigstens ein Medium ein Brennstoff. Der Brennstoff ist bevorzugt aus einer Gruppe von Brennstoffen ausgewählt, welche Wasserstoff, Methan, Kohlenmonoxid und dergleichen enthält. Bei einer bevorzugten Ausführungsform wird die Kathodenseite der Brennstoffzelle mit Sauerstoff beziehungsweise sauerstoffhaltiger Umgebungsluft beschickt, wohingegen die Anode im wesentlichen mit Wasserstoff beschickt wird:

Bei den jeweils ablaufenden Reaktionen in der Kathoden- beziehungsweise Anodenseite, wird einerseits der Wasserstoff zu H⁺-lonen umgewandelt, während der Sauerstoff zu (OH)⁻-lonen umgewandelt wird. Durch diese jeweiligen Reaktionen werden auf der Anodenseite Elektroden freigesetzt, welche zur Kathodenseite gelangen und hier aufgenommen werden. Auf diese Weise wird eine Ladungstrennung bewirkt, das heißt, chemische Energie wurde in elektrische Energie umgewandelt, wobei Anode und Kathode die Elektroden einer Spannungsquelle bilden. Die Interkonnektorplatte des Brennstoffelements ist bevorzugt aus einem ferretischen Edelstahl hergestellt, der eine Schutzschicht aufweist, um Oxidation zu verhindern. Diese Schicht weist Cr₂ O₃ auf und einen Chromanteil zwischen 10% und 30%, bevorzugt zwischen 13% und 20%.

Diese Schutzschicht bzw. Passivschicht könnte auch Al₂O₃ aufweisen bzw. aus Al₂O₃ bestehen, wobei diese Schicht bevorzugt auf Ferritbasis gebildet wurde.

In einer weiteren bevorzugten Ausführungsform erfolgt die Absenkung des Feuchtigkeitsgrades eines Mediums durch dessen Abkühlung. Dazu kann beispielsweise die Umgebungsluft beziehungsweise die Luft aus einer Klimaanlage nach dem Verdampfer abgezweigt werden und in den Luftansaugtrakt der Kathodenseite des Brennstoffelements geleitet werden.

Dabei ist zu beachten, dass eine SOFC unter Volllast einen Luftbedarf von ca. 0,4 kg/min aufweist, während bei einer mittleren Gebläseleistung einer Klimaanlage ein Luftmassenstrom von ca. 3 kg/min zur Verfügung steht und durch die Klimaanlage geleitet wird. Der Wassergehalt in der Umgebungsluft nimmt bei steigender Temperatur und steigender relativer Feuchte rasch zu, so dass eine Abkühlung der Luft umgekehrt eine starke Abnahme der Luftfeuchtigkeit mit sich bringt.

In einer besonders bevorzugten Ausführungsform erfolgt die Absenkung des Feuchtigkeitsgrades durch wenigstens eine Trocknungseinrichtung, welche aus einer Gruppe von Trocknungseinrichtungen ausgewählt sind, welche Zeolit und dergleichen enthält. Durch eine solche Trocknungseinrichtung können relativ zu durch eine Klimaanlage getrockneter Luft deutlich geringere Feuchtegehalte erzielt werden, da der Feuchtegehalt nach unten nicht durch eine minimal erreichbare Lufttemperatur (üblicherweise nicht kleiner + 5°C bei einer Klimaanlage) und dem zu dieser Temperatur korrespondierenden Feuchtegehalt dieser Luft begrenzt ist.

So kann beispielsweise eine Trocknerkartusche an einer beliebigen Stelle des Strömungspfades des ersten Mediums vor der Brennstoffzelle angeordnet werden, wodurch eine Trocknung der Luft bewirkt wird. Auch diese Variante stellt eine kostengünstige Ausführungsform dar, wobei zusätzlich derartige Trocknerpatronen, wie beispielsweise in Zeolitbehältern untergebracht, kostengünstig durch die in der SOFC produzierte Wärme thermisch regeneriert werden können.

Besonders vorteilhaft ist ein einzelner thermisch regenerierbarer Trockner, zum Beispiel ein Absorptionsrad. Ein Absorptionsrad ist ein rotierendes, mit Absorptionsmitteln (hier: trocknenden Substanzen) belegtes System. Ein Teil der trocknenden Substanz befeuchtet sich im zu trocknenden Gasstrom, während der restliche Teil thermisch regeneriert wird. Durch die Rotation des Rads findet eine periodische Regenerierung der Absorptionsmittel statt, wodurch deren Menge relativ zur Festbett-Absorption gering gehalten werden kann.

Besonders vorteilhaft ist es, zur thermischen Regeneration heiße Abluft, die in der SOFC selbst entsteht, zu verwenden. Geeignet ist das im Anodengasnachverbrenner entstehende und zum Aufheizen des Abgaswärmeüberträgers benötigte Gas, das nach Austritt aus dem Abgaswärmeüberträger noch eine Temperatur zwischen 300 und 350°C aufweist.

Bevorzugt handelt es sich bei der ersten Elektrode um eine Anode und bei der zweiten Elektrode um eine Kathode, wobei das Medium, dessen Parameter geändert wurde, wie oben ausgeführt, auf die Kathode geleitet wird. Daher ist bei dieser Ausführungsform der Effekt der Vortrocknung der Kathodenluft zwar nur auf der Kathodenseite wirksam, dort sind jedoch die eingangs beschriebenen Probleme weitaus drängender als auf die Anodenseite.

In einer weiteren bevorzugten Ausführungsform handelt es sich bei der Brennstoffzelle um eine SOFC (Solid Oxide Fuel Cell)-Zelle.

Die Erfindung ist ferner auf eine Vorrichtung zum Betreiben einer Hochtemperatur-Brennstoffzelle, gerichtet, wobei die wenigstens eine Brennstoffzelle wenigstens eine erste und eine zweite Elektrode aufweist, und mit wenigstens einem ersten wenigstens einen Brennstoff enthaltenden und einem zweiten wenigstens Umgebungsluft enthaltenden Medium beschickt wird. Dabei weist die Vorrichtung wenigstens eine Trocknungseinrichtung auf, welche eine Trocknung wenigstens eines der Medien bewirkt.

Bei der Trocknungseinrichtung kann es sich um eine Trocknungseinrichtung handeln, welche unmittelbar dem Zweck der Trocknung des Mediums dient, wie beispielsweise ein Behälter mit Zeolith, hygroskopischem Material und dergleichen.

Wie ausgeführt, weist die Trocknungseinrichtung wenigstens eine das Medium trocknende Substanz auf. Bevorzugt handelt es sich dabei um eine Substanz, die thermisch regenerierbar ist; das bedeutet, dass die Trocknungseinrichtung selbst thermisch regenerierbar ist. Bevorzugt erfolgt die thermische Regeneration der Trocknungseinrichtung durch ein heißes Gas.

In einer weiteren bevorzugten Ausführungsform sind Mittel vorgesehen, welche es erlauben, dass die thermische Regeneration der Trocknungseinrichtung durch das heiße Gas erfolgt, welche bei der Nachverbrennung des Restwasserstoff enthaltenden Anodenabgases im Anodengasnachbrenner entsteht. Auf diese Weise wird besonders vorteilhaft eine effiziente Regeneration der Trocknungseinrichtung erreicht, da die Trocknung durch ein Medium erfolgt, welches beim Betrieb der Vorrichtung selbst entsteht.

Andererseits kann es sich bei Trocknungseinrichtung jedoch auch um eine Trocknungseinrichtung handeln, die nur indirekt eine Senkung des Feuchtigkeitsgehalts der Luft bewirkt, beispielsweise über eine Abkühlung derselben. Dabei ist beispielsweise auch ein Verdampfer einer Klimaanlage eine Trocknungseinrichtung im Sinne der Erfindung.

Die Brennstoffzellen sind durch eine Interkonnektorplatte miteinander verbunden. Diese Interkonnektorplatte ist bevorzugt, wie oben angemerkt, aus ferritischen Edelstählen, welche Chromverbindungen aufweist, hergestellt.

Wie eingangs erwähnt, wird dieses Material unter anderem auch aus Kostengründen verwendet. Ein weiterer Grund für die Verwendung dieser ferritischen Edelstähle besteht darin, dass der Wärmeausdehnungskoeffizient des Interkonnektorplattenwerkstoffes möglichst ähnlich dem der in der SOFC-Interkonnektor-Brennstoffzelle keramischen Materialien sein muss, was bei ferritischen Edelstählen gut erfüllt ist.

In einer weiteren bevorzugten Ausführungsform weist die Vorrichtung eine dem Energiewandler nachgeschaltete Verbrennungseinrichtung auf. Dabei kann es sich insbesondere, aber nicht ausschließlich, um einen der Brennstoffzelle beziehungsweise der Vielzahl von Brennstoffzellen nachgeschalteten Anodengasnachverbrenner handeln. Auch hinsichtlich des Betriebs dieses Anodengasnachverbrenners ist die Trocknung der Umgebungsluft vorteilhaft. Beim Stand der Technik wurde trockenes Anodenabgas mit dem Kathodenabgas, also der feuchten Luft, vermischt. Dies bewirkte auch im Anodengasnachverbrenner eine Chromabdampfung. Durch die vorgetrocknete Umgebungsluft wird auch hier die Chromabdampfung weiter reduziert, so dass man auch im Falle des Anodengasnachbrenners mit kostengünstigeren Werkstoffen arbeiten kann.

In einer weiteren bevorzugten Ausführungsform weist der Energiewandler eine Anode und eine Kathode auf, wobei der Anode ein Reformer vorgeschaltet ist. Ein Reformer dient dazu, kohlenwasserstoffhaltige Brennstoffe (zum Beispiel Erdgas oder Methanol) bei hohen Temperaturen in wasserstoffreiche Gase zu überführen.

Bei einer weiteren bevorzugten Ausführungsform ist wenigstens eine Vorrichtung zum Austausch von Wärme vorgesehen. So kann beispielsweise ein Abgaswärmeüberträger vorgesehen sein, in welchem das aus dem Anodengasnachverbrenner austretende Gas mit der vorgetrockneten Prozessluft, die anschließend auf der Kathodenseite in die Brennstoffzelle eintritt, in Wechselwirkung tritt und diese aufheizt. Eine weitere derartige Wechselwirkung kann zwischen dem Anodenabgas und der Umgebungsluft in einem Rezirkulierungswärmeüberträger stattfinden, in dem die Kathodenluft eine erste Aufheizung erfährt.

Bevorzugt wird die Brennstoffzelle beziehungsweise die Vielzahl von Brennstoffzellen mit Temperaturen unter 1000 Grad Celsius, bevorzugt unter 900 Grad Celsius und, besonders bevorzugt, im Bereich von 800 Grad Celsius und darunter betrieben.

Dabei wird bei einer bevorzugten Ausführungsform das zweite Medium, das heißt die Umgebungsluft, angesaugt und auf diese Weise der Kathodenseite zugeführt.

Die Trocknereinrichtung kann als Behälter in einer der Zuführleitungen für die Kathodenseite integriert sein, wobei neben einer Trocknungseinheit auch Filterkomponenten für die Umgebungsluft vorgesehen sein können.

Durch das erfindungsgemäße Verfahren sowie die erfindungsgemäße Vorrichtung kann das Problem der Leistungseinbußen bei SOFC-Brennstoffzellen durch abgedampfte Chromverbindungen aus der Kathoden-Interkonnektorplatte oder den kathodenseitig vorgeschalteten Elementen weitgehend gemildert werden. Dazu ist keine kostenaufwendige Variation an dem Material der Interkonnektorplatte nötig. Durch die Verminderung der Chromabdampfungen kann niedrig legierter - und damit kostengünstiger - Hochtemperaturedelstahl verwendet werden und andererseits auch auf aufwendige und nicht nachhaltige Beschichtung verzichtet werden. Dabei können die genannten kostengünstigeren Werkstoffe einerseits für die Interkonnektorplatten der SOFC-Brennstoffzelle als auch für die Brennstoffzelle umgebende Komponenten, wie Wärmeüberträger und Anodengasnachverbrenner, verwendet werden. Für die SOFC-Brennstoffzelle werden insbesondere kostengünstige ferritische Edelstähle verwendet und für die die Brennstoffzelle umgebenden Komponenten ferritische und insbesondere auch austenitische Edelstähle. Daneben können die Komponenten natürlich speziell durch Schweißen und/oder Löten gefügt sein, wobei für das Löten natürlich spezielle Lote auf Basis von Cu-, Ni-, Au-, Co-, Ag- etc. verwendet werden.

Es ist unter Umständen ein Vorteil des vorgeschlagenen Verfahrens, dass durch die einzelne Maßnahme der Vortrocknung der angesaugten Kathodenluft die Cr-Abdampfung in allen Komponenten, die von der Kathodenluft (Wärmeüberträger, SOFC) oder Gemischen aus Kathoden- und Anodenluft (Anodengasnachverbrenner) durchströmt werden, verringert wird.

Das Gesagte gilt dabei nicht nur für die Abdampfung von Cr-Verbindungen vom jeweiligen Grundwerkstoff, sondern auch für die Abdampfung von Cr-Verbindungen von Loten, insbesondere dem Fachmann bekannten Crhaltigen Ni-Basis-Loten, die für das Fügen von Hochtemperaturwärmeüberträgern häufig verwendet werden. Dies ist insbesondere dann von großer Bedeutung, wenn für das Fügen Cr-haltige Ni-Basis-Lotfolien verwendet werden, so dass bis zu 50 % der Oberfläche der Komponente nicht aus dem Grundwerkstoff, sondern aus dem beim Fügen geschmolzenen Ni-Basis-Lot bestehen können. Eine positive Einwirkung auf die Cr-Abdampfrate über Veränderung des Grundwerkstoffes wäre dann nur eingeschränkt wirksam.

Daneben muss, aufgrund der Herabsetzung der Feuchte der in die Brennstoffzelle eintretenden Umgebungsluft auch eine eventuelle Taupunktkorrosion bei der Werkstoffauswahl nicht mehr berücksichtigt werden, was dazu führt, dass auch aus diesem Grund niedriger legierte - und damit kostengünstigere - Werkstoffe verwendet werden können.

Auch unabhängig von einer Verwendung im Rahmen einer SOFC-Brennstoffzelle der Komponenten, kann durch die verringerte Chromabdampfung die Verarmung des Grundwerkstoffes an Chrom verringert werden, wodurch die Zeit bis zu einer sogenannten Break-Away-Oxidation verlängert wird, beziehungsweise diese gänzlich verhindert werden kann. Break-Away-Oxidation tritt dann auf, wenn es zu einer so weitgehenden Verarmung des Grundwerkstoffes an Cr gekommen ist, dass eine schützende Cr-haltige Oxidschicht nicht mehr gebildet werden kann und rasche Oxidation des Grundwerkstoffes über die Bildung von Fe-haltigen Oberflächenoxiden einsetzt.

Weitere Vorteile und Ausführungsformen der vorliegenden Erfindung ergeben sich aus den nachstehenden Zeichnungen.

Dabei zeigen:
- Fig. 1: ein Blockdiagramm eines Energiewandlers sowie weiterer diesem zugeordneter Komponenten;
- Fig. 2: eine Darstellung der Abhängigkeit der Dampfdrucke von CrO₃ und CrO₂ (OH)₂ von der Temperatur; und
- Fig. 3: ein Diagramm zur Veranschaulichung des Zusammenhangs zwischen der Luftfeuchte und der Temperatur.

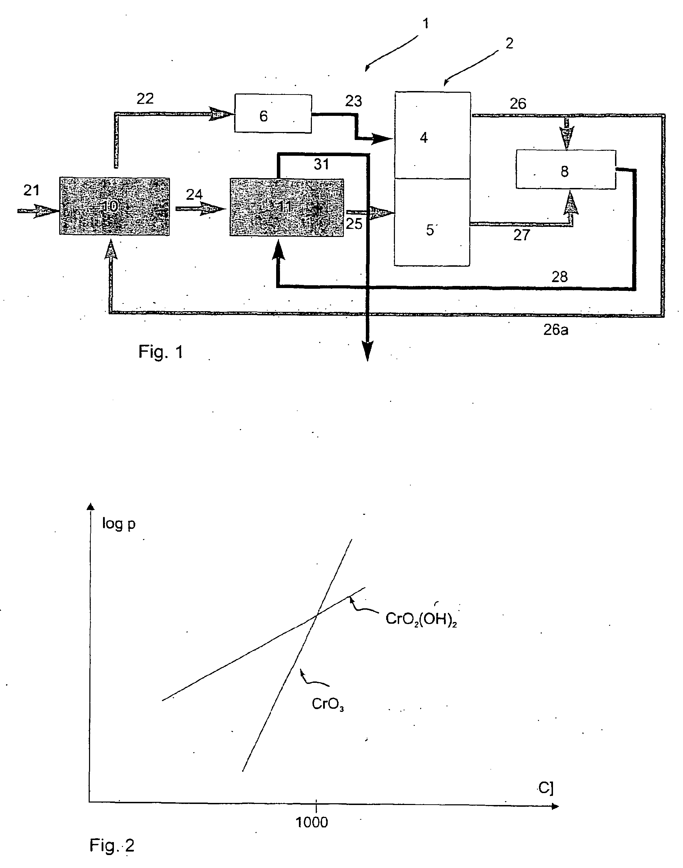

Fig. 1 zeigt ein Blockdiagramm des Energiewandlers 2 mit den diesen umgebenden Komponenten. Dabei bezieht sich das Bezugszeichen 4 auf die Anode beziehungsweise die Anodenseite des Energiewandlers und das Bezugszeichen 5 auf die Kathode beziehungsweise Kathodenseite des Energiewandlers, bei dem es sich in dieser Ausführungsform um eine Brennstoffzelle beziehungsweise eine Vielzahl von Brennstoffzellen handelt. Zwischen den beiden Elektroden ist ein Elektrolyt angeordnet.

Das Bezugszeichen 8 bezieht sich auf einen Anodengasnachverbrenner. Dieser dient dazu, das aus der Anode austretende, noch nicht verbrauchte Wasserstoffgas mit der aus der Kathode austretenden Luft beziehungsweise mit dem darin enthaltenem Rest-Sauerstoffgas zu verbrennen. Dies ist durch die Pfeile beziehungsweise Linien 26 und 27 gezeigt, wobei Linie 26 den Verlauf des Wasserstoffgases darstellt und Linie 27 den Verlauf des Sauerstoffgases, beziehungsweise der Luft. Gleichzeitig wird jedoch ein Rest des Anodenabgases (das heißt des Wasserstoffs, der nicht für die Verbrennung im Anodengasnachverbrenner benötigt wird) wiederum dem Prozess zugeführt. Dabei verläuft das Anodenabgas zunächst entlang des Pfeils 26a in Richtung eines Wärmeüberträgers beziehungsweise Rezirkulierungswärmeüberträgers 10, in welchem das Anodenabgas mit Hilfe der in diesem Wärmeüberträger 10 eintretenden vorgetrockneten Kathodenluft 21 gekühlt wird. Gleichzeitig wird die Kathodenluft einer ersten Aufheizung unterzogen.

Von dort gelangt das Wasserstoffgas entlang des Pfeils 22 in einen Reformer 6 entlang des Pfeils 23 in die Anodenseite der Brennstoffzelle.

Das Bezugszeichen 11 kennzeichnet einen kathodenseitig vorgeschalteten Abgaswärmeüberträger zur weiteren Aufheizung der Kathodenprozessluft. Zu diesem Zweck wird das aus dem Anodengasnachverbrenner austretende heiße Brennerabgas in den Abgaswärmeüberträger 11 geleitet, und von dort entlang des Pfeils 31 aus der Vorrichtung heraus. Das heiße Anodenabgas kann erfindungsgemäß zur thermischen Regeneration einer Kathodengas-Trocknungsvorrichtung (nicht in Fig. 1 dargestellt) verwendet werden. Die vorgeheizte Umgebungsluft wird ihrerseits entlang des Pfeils 24 in den Wärmeüberträger 11 geleitet, weiter aufgeheizt und tritt anschließend entlang des Pfeils 25 in die Kathodenseite der Brennstoffzellen. Entlang des Pfeils 21 tritt vorgetrocknete Kathodenluft in den Wärmeüberträger 10 ein. Dies bedeutet, dass hier erfindungsgemäß die Umluft bereits vorgetrocknet, das heißt deren Feuchtigkeitsgehalt abgesenkt wurde. Dies kann, wie oben erwähnt, beispielsweise durch eine Abkühlung der Luft, insbesondere, aber nicht ausschließlich in einem Verdampfer einer Klimaanlage geschehen und/oder aber insbesondere auch durch Trocknerkartuschen oder dergleichen.

Die Zuleitung des Brennstoffes von einem externen Brennstoffvorrat in die Brennstoffzelle bzw. den Reformer ist nicht dargestellt.

In Fig. 2 ist die schematische Abhängigkeit der Dampfdrucke von CrO₃ und CrO₂ (OH)₂ (CrO₂ (OH)₂ wird beispielhaft für die Gruppe der entstehenden Cr-Oxyhydroxide genannt) von der Temperatur dargestellt. Dabei ist die Temperatur auf der x-Achse aufgetragen und der Logarithmus des Drucks auf der y-Achse.

In Experimenten konnte ermittelt werden, dass sich die flüchtigen Chrom (Cr)-Verbindungen überwiegend gemäß den folgenden Reaktionen bilden (der Einfachheit halber wird hier von einer Cr₂O₃-Schicht auf der Oberfläche ausgegangen und nicht von Mischoxiden und/oder Spinell-Phasen, die sich beispielsweise auf Edelstählen bilden:

Cr₂O₃(s) + 1,5 O₂(g) = 2 CrO₃ (g) (1)

Cr₂O₃(s) + 1,5 O₂(g) + 2 H₂O(g) = 2 CrO₂(OH)₂(g) (2)

Cr₂O₃(s) + O₂(g) + H₂O(g) = 2 CrO₂(OH)(g) (3)

Dabei konnte insbesondere nachgewiesen werden, dass für Temperaturen < 1000 Grad Celsius der Partialdruck des CrO₃ (in der gasförmigen Phase) geringer ist als für die Cr-Oxyhydroxide, da der Partialdruck des CrO₃ wesentlich stärker mit sinkender Temperatur abnimmt als der Partialdruck der Cr-Oxyhydroxide.

In Fig.2 ist dieser Zusammenhang beispielhaft für das flüchtige CrO₂(OH)₂(g) gezeigt. Bei einer Temperatur von etwa 1000 Grad Celsius schneiden sich die beiden Geraden, die näherungsweise die Abhängigkeit des Partialdrucks der beiden Bestandteile CrO₃ und CrO₂(OH)₂ von der Temperatur darstellen. Unterhalb von 1000 Grad Celsius erkannt man daher, dass der Partialdruck des CrO₃ niedriger liegt als der Partialdruck des CrO₂(OH)₂.

Wie oben ausgeführt, liegt die Betriebstemperatur der SOFC-Brennstoffzelle etwa bei 800 Grad Celsius. Dabei ist jedoch zu berücksichtigen, dass auch diese Temperatur im Laufe der weiteren Entwicklung weiter gesenkt werden soll.

Im Falle eines kathodenseitig vorgeschalteten Abgaswärmeüberträgers 11 (vgl. Fig. 1) liegt diese Temperatur noch um bis zu 50 Grad Kelvin niedriger, das heißt im Bereich von 750 Grad Celsius. Der Grund hierfür liegt darin, dass die Kathodenprozessluft auch einen Kühleffekt aufweisen soll. Lediglich im Falle einer Kaltstartphase liegt die Temperatur des Abgaswärmeüberträgers 11, zeitlich auf weniger als eine Minute begrenzt, auf Temperaturen zwischen 800 und 900 Grad Celsius, da in dieser Phase die Brennstoffzelle möglichst schnell hochgeheizt und somit betriebsbereit sein soll.

Aufgrund der beschriebenen, in Fig. 2 dargestellten Partialdruckverhältnisse ergibt sich, dass bei den Betriebstemperaturen der überwiegende Teil der Chromabdampfung gemäß den Reaktionsgleichungen 2 und 3 abläuft, da in diesem Falle der jeweils auf der rechten Seite der Gleichung stehende Bestandteil CrO₂(OH₂) einen höheren Partialdruck aufweist, als der CrO₃-Anteil, der sich aus Gleichung 1 ergibt. Daher sind bei den hier vorliegenden Temperaturen im Bereich von 800 Grad Celsius im wesentlichen die Gleichungen 2 und 3 für die Abdampfung von Cr verantwortlich.

Da sowohl in Gleichung 2 als auch in Gleichung 3 auf der Seite der Edukte Wasser (H₂O) auftaucht, kann man durch eine Vortrocknung der Kathodenluft und folglich eine Absenkung der absoluten Feuchte und damit des Wasserpartialdruckes in der Luft die Menge der abgedampften Cr-Oxyhydroxide und damit auch maßgeblich die Gesamtmenge der gebildeten flüchtigen Cr-Oxide auf der Produktseite reduzieren (Folge des Massenwirkungsgesetzes).

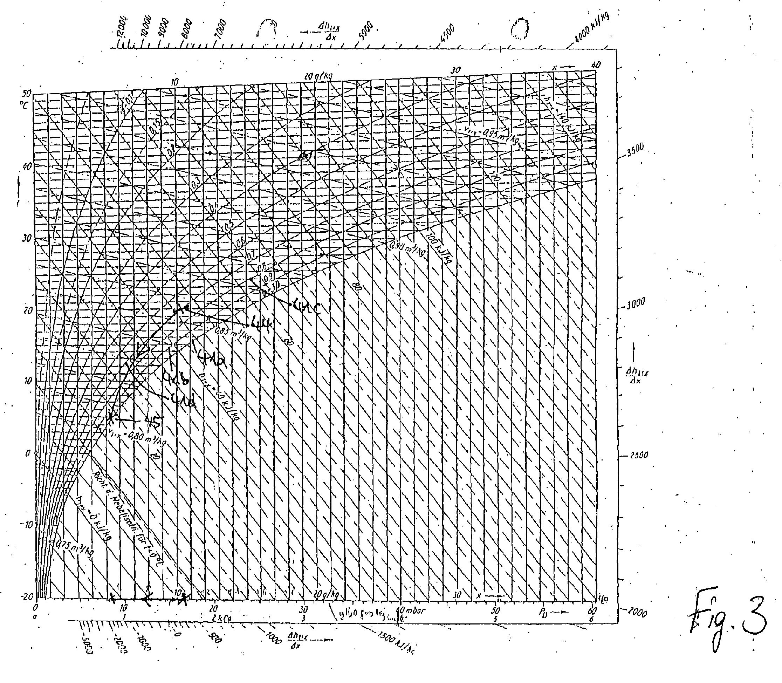

In Fig. 3 wird veranschaulicht, wie eine derartige Trocknung über eine Absenkung der Temperatur erreicht werden kann.

In Fig. 3 ist ein sogenanntes Mollier-h-x-Diagramm dargestellt, wobei der Druck hier 1 bar beziehungsweise 100 Kilopascal beträgt. Dabei ist auf der y-Achse eine Temperatur aufgetragen im Bereich von - 20 Grad Celsius bis + 50 Grad Celsius. Bei dem hier dargestellten beziehungsweise untersuchten Medium handelt es sich um Feuchtluft.

Bei diesem Mollier-Diagramm handelt es sich um ein Zustandsdiagramm der Thermodynamik, bei dem die spezifische (das heißt massenbezogene) Enthalpie h von Gasen - hier von Feuchtluft - als Koordinate aufgetragen wird, wobei das hier vorliegende Diagramm genauer gesagt ein sogenanntes Enthalpie-Feuchtigkeitsgrad-Diagramm (h-x-Diagramm), ist, bei welchem der Feuchtigkeitsgrad x als Abszisse aufgetragen wird.

Die gekrümmten Linien 41 a, 41 b, 41 c etc. zeigen die Abhängigkeit zwischen der relativen Feuchte und der absoluten Feuchte von Luft und deren Temperatur für jeweils unterschiedliche relative Feuchten, wie beispielweise im Falle der Linie 41 a, die relative Luftfeuchte bei knapp 100 Prozent und im Falle der Linie 41 d bei 70 Prozent.

Geht man in dem Diagramm von dem Punkt 44 aus, der die Situation bei 20 Grad Celsius und einer relativen Feuchte von 70 Prozent wiederspiegelt, so stellt man fest, dass in diesem Falle der absolute auf der x-Achse aufgetragene Wassergehalt bei 10 g Wasser pro kg Luft liegt. Hingegen liegt an der Position 45 bei einer Temperatur von 5 Grad Celsius und einer relativen Luftfeuchte von 100 Prozent der absolute Wassergehalt bei ca. 5 g pro kg Luft. Diese Werte ergeben sich, wenn man die jeweiligen Punkte 44 und 45 senkrecht nach unten auf die x-Achse projiziert und die Werte der absoluten Feuchte abliest.

Dies bedeutet, dass bei der Abkühlung der Luft von 20 Grad Celsius auf 5 Grad Celsius zwar die relative Feuchte von 70 Prozent auf 100 Grad ansteigt, jedoch im Ergebnis der absolute Wassergehalt sinkt.

Bei steigender Temperatur und steigender relativer Feuchte würde der absolute Wassergehalt in der Luft stark zunehmen, und so würde beispielsweise bei einer Temperatur von 30 Grad Celsius und in einer relativen Luftfeuchte von 70 Prozent oder bei 24 Grad Celsius in einer relativen Feuchte von 100 Prozent 1 kg Luft bereits 19 g Wasser enthalten. Dies bedeutet, dass sich die Vortrocknung der Luft insbesondere bei hoher Luftfeuchte und hoher Temperatur auswirkt, wie beispielsweise in Ländern mit feuchtheißem Klima.

Die vorliegende Erfindung eignet sich insbesondere, aber nicht ausschließlich in Kraftfahrzeugen, wobei das Brennstoffelement als zum Antrieb des Kraftfahrzeuges und/oder als zusätzliche Stromquelle (APU: Auxiliary Power Unit) dient. Darüber hinaus kann in Kraftfahrzeugen ein eventuell vorhandener Verdampfer einer Klimaanlage zur Trocknung der Umgebungsluft genutzt werden.

## Patentansprüche

1. Verfahren zum Betreiben einer Hochtemperaturbrennstoffzelle, welche eine Interkonnektorplatte und wenigstens eine erste und eine zweite Elektrode aufweist mit folgenden Verfahrensschritten:
- Beschicken der Brennstoffzelle mit wenigstens einem ersten Medium, welches wenigstens einen Brennstoff enthält;
- Beschicken der Brennstoffzelle mit wenigstens einem zweiten Medium, welches wenigstens teilweise Umgebungsluft enthält,
wobei wenigstens eine thermodynamische Kenngröße wenigstens eines Mediums vor dem Beschicken der Brennstoffzelle derart beeinflusst wurde, dass ihr Wert in einem vorgegebenen Bereich liegt, **dadurch gekennzeichnet, dass** die Beeinflussung der wenigstens einen thermodynamischen Kenngröße in einer Absenkung der relativen Feuchte eines Mediums besteht.

2. Verfahren nach Anspruch 1, **dadurch gekennzeichnet, dass** das Medium, dessen thermodynamische Kenngröße geändert wurde, gasförmig ist.

3. Verfahren nach wenigstens einem der vorangegangenen Ansprüche, **dadurch gekennzeichnet, dass** das Medium, dessen thermodynamische Kenngröße geändert wurde, das zweite Medium ist.

4. Verfahren nach wenigstens einem der vorangegangenen Ansprüche, **dadurch gekennzeichnet, dass** der Brennstoff aus einer Gruppe von Brennstoffen ausgewählt ist, welche Wasserstoff (H₂), Methan (CH₄,) Kohlenmonoxid (CO) und dergleichen enthält.

5. Verfahren nach wenigstens einem der vorangegangenen Ansprüche, **dadurch gekennzeichnet, dass** die Absenkung des Feuchtigkeitsgrades eines Mediums durch dessen Abkühlung erfolgt.

6. Verfahren nach wenigstens einem der vorangegangenen Ansprüche, **dadurch gekennzeichnet, dass** die Absenkung des Feuchtigkeitsgrades durch wenigstens eine Trocknungseinrichtung erfolgt, welche aus einer Gruppe von Trocknungseinrichtungen ausgewählt sind, welche Zeolith und dergleichen enthält.

7. Verfahren, nach wenigstens einem der vorangegangenen Ansprüche, **dadurch gekennzeichnet, dass** die Trocknungseinrichtung thermisch regenerierbar ist.

8. Verfahren, nach Anspruch 7, **dadurch gekennzeichnet, dass** die thermische Regeneration der Trocknungseinrichtung durch ein heißes Gas erfolgt.

9. Verfahren nach wenigstens einem der vorangegangenen Ansprüche, **dadurch gekennzeichnet, dass** das heiße Gas im Wesentlichen bei der Nachverbrennung der Restwasserstoff enthaltenden Anodengases im Anodengasnachverbrenner entsteht.

10. Verfahren nach wenigstens einem der vorangegangenen Ansprüche, **dadurch gekennzeichnet, dass** die erste Elektrode eine Anode und die zweite Elektrode eine Kathode ist und das Medium, dessen thermodynamische Kenngröße geändert wurde, auf die Kathode geleitet wird.

11. Verfahren nach wenigstens einem der vorangegangenen Ansprüche, **dadurch gekennzeichnet, dass** die Brennstoffzelle eine (SOFC) Solid Oxide Fluid Cell-Brennstoffzelle ist.

12. Vorrichtung zum Betreiben wenigstens einer Hochtemperaturbrennstoffzelle, wobei die wenigstens eine Brennstoffzelle eine Interkonnektorplatte und wenigstens eine erste und eine zweite Elektrode aufweist und mit wenigstens einem ersten, wenigstens einen Brennstoff enthaltenden und wenigstens einem zweiten wenigstens Umgebungsluft enthaltenden Medium beschickt wird, **dadurch gekennzeichnet dass** die Vorrichtung wenigstens eine. Trocknungseinrichtung aufweist, welche eine Trocknung wenigstens eines der Medien bewirkt.

13. Vorrichtung nach Anspruch 12, **dadurch gekennzeichnet, dass** der Energiewandler wenigstens eine, bevorzugt eine Vielzahl von Brennstoffzellen aufweist.

14. Vorrichtung nach einem der vorangegangenen Ansprüche, **dadurch gekennzeichnet, dass** die Trocknungseinrichtung thermisch regenerierbar ist.

15. Vorrichtung nach einem der vorangegangenen Ansprüche, **dadurch gekennzeichnet, dass** die thermische Regeneration durch ein heißes Gas erfolgt.

16. Vorrichtung nach einem der vorangegangenen Ansprüche, **dadurch gekennzeichnet, dass** das heiße Gas im Wesentlichen bei der Nachverbrennung des Restwasserstoffs enthaltenden Anodenabgases im Anodengasnachverbrenner entsteht.

17. Vorrichtung nach wenigstens einem der vorangegangenen Ansprüche, **dadurch gekennzeichnet, dass** die Trocknungseinrichtung wenigstens eine das Medium trocknende Substanz aufweist.

18. Vorrichtung nach wenigstens einem der vorangegangenen Ansprüche, **dadurch gekennzeichnet, dass** die Trocknungseinrichtung der Verdampfer einer Klimaanlage ist, durch welchen das Medium abgekühlt wird.

19. Vorrichtung nach wenigstens einem der vorangegangenen Ansprüche, **dadurch gekennzeichnet, dass** die Interkonnektorplatten aus einem Material hergestellt sind, welches ferritische Edelstähle aufweist.

20. Vorrichtung nach wenigstens einem der vorangegangenen Ansprüche, **dadurch gekennzeichnet, dass** die Interkonnektorplatten aus einem Material hergestellt sind, welches Chrom (Cr) aufweist.

21. Vorrichtung nach wenigstens einem der vorangegangenen Ansprüche, **dadurch gekennzeichnet, dass** die Vorrichtung eine dem Energiewandler nachgeschaltete Verbrennungseinrichtung aufweist.

22. Vorrichtung nach wenigstens einem der vorangegangenen Ansprüche, **dadurch gekennzeichnet, dass** der Energiewandler eine Anode und eine Kathode aufweist und der Anode ein Reformer vorgeschaltet ist.

23. Vorrichtung nach wenigstens einem der vorangegangenen Ansprüche, **dadurch gekennzeichnet, dass** wenigstens eine Vorrichtung zum Austausch von Wärme vorgesehen ist.

24. Vorrichtung nach wenigstens einem der vorangegangenen Ansprüche, **dadurch gekennzeichnet, dass** die Vorrichtung zum Austausch von Wärme ein Abgaswärmetauscher ist.

## Claims

1. Method for operating a high-temperature fuel cell comprising an interconnector plate and at least one first and one second electrode, said method having the following steps:
- the fuel cell is charged with at least one first medium containing at least one fuel;
- the fuel cell is charged with at least one second medium containing ambient air, at least in part,
such that before the fuel cell is charged at least one thermodynamic characteristic of at least one medium is influenced in such manner that its value lies within a specified range, **characterised in that** the influencing of the said at least one thermodynamic characteristic consists in reducing the relative humidity of a medium.

2. Method according to Claim 1, **characterised in that** the medium whose thermodynamic characteristic has been modified is gaseous.

3. Method according to either of the preceding claims, **characterised in that** the medium whose thermodynamic characteristic has been modified is the second medium.

4. Method according to any of the preceding claims, **characterised in that** the fuel is chosen from a group of fuels comprising hydrogen (H₂), methane (CH₄), carbon monoxide (CO) and suchlike.

5. Method according to any of the preceding claims, **characterised in that** the humidity level of a medium is reduced by cooling it.

6. Method according to any of the preceding claims, **characterised in that** the humidity level is reduced by at least one drying device chosen from a group of drying devices that contain zeolite and suchlike.

7. Method according to any of the preceding claims, **characterised in that** the drying device can be thermally regenerated.

8. Method according to Claim 7, **characterised in that** the drying device is thermally regenerated by a hot gas.

9. Method according to any of the preceding claims, **characterised in that** the hot gas is produced essentially during the after-burning of the anode gas that contains residual hydrogen in the anode gas after-burner.

10. Method according to any of the preceding claims, **characterised in that** the first electrode is an anode and the second electrode a cathode, and the medium whose thermodynamic characteristic has been modified is fed to the cathode.

11. Method according to any of the preceding claims, **characterised in that** the fuel cell is a Solid Oxide Fuel Cell (SOFC).

12. Device for operating at least one high-temperature fuel cell, the said at least one fuel cell comprising an interconnector plate and at least a first and a second electrode and being charged with at least one first medium containing at least one fuel and at least one second medium containing at least ambient air, **characterised in that** the device comprises at least one drying device which dries at least one of the said media.

13. Device according to Claim 12, **characterised in that** the energy converter comprises at least one and preferably a plurality of fuel cells.

14. Device according to any of the preceding claims, **characterised in that** the drying device can be thermally regenerated.

15. Device according to any of the preceding claims, **characterised in that** the thermal regeneration is effected by a hot gas.

16. Device according to any of the preceding claims, **characterised in that** the hot gas is produced essentially during the after-burning of the anode gas that contains residual hydrogen in the anode gas after-burner.

17. Device according to any of the preceding claims, **characterised in that** the drying device contains at least one substance which dries the medium.

18. Device according to any of the preceding claims, **characterised in that** the drying device is the evaporator of an air-conditioning unit, by which the medium is cooled.

19. Device according to any of the preceding claims, **characterised in that** the interconnector plates are made of a material that contains ferritic stainless steel.

20. Device according to any of the preceding claims, **characterised in that** the interconnector plates are made of a material that contains chromium (Cr).

21. Device according to any of the preceding claims, **characterised in that** the device comprises a combustion device connected downstream from the energy converter.

22. Device according to any of the preceding claims, **characterised in that** the energy converter comprises an anode and a cathode, and a reformer is connected upstream from the anode.

23. Device according to any of the preceding claims, **characterised in that** at least one heat exchange device is provided.

24. Device according to any of the preceding claims, **characterised in that** the heat exchange device is an exhaust gas heat exchanger.

## Revendications

1. Procédé de fonctionnement d'une pile à combustible à haute température qui présente une plaque d'interconnexion et au moins une première et une deuxième électrodes, comprenant les phases de procédé suivantes consistant :
- à alimenter la pile à combustible avec au moins un premier milieu qui contient au moins un combustible ;
- à alimenter la pile à combustible avec au moins un deuxième milieu qui contient au moins partiellement de l'air ambiant,
où au moins un paramètre thermodynamique d'au moins un milieu peut être influencé, avant l'alimentation de la pile à combustible, de manière telle que la valeur de ce paramètre se trouve dans une plage prédéfinie,
**caractérisé en ce que** l'influence du paramètre thermodynamique au moins au nombre de un consiste à diminuer l'humidité relative d'un milieu.

2. Procédé selon la revendication 1, **caractérisé en ce que** le milieu, dont le paramètre thermodynamique a été modifié, se présente sous forme gazeuse.

3. Procédé selon au moins l'une ou l'autre des revendications précédentes, **caractérisé en ce que** le milieu, dont le paramètre thermodynamique a été modifié, est le deuxième milieu.

4. Procédé selon au moins l'une quelconque des revendications précédentes, **caractérisé en ce que** le combustible est choisi parmi un groupe de combustibles qui comprend de l'hydrogène (H₂), du méthane (CH₄), du monoxyde de carbone (CO) et des éléments de type analogue.

5. Procédé selon au moins l'une quelconque des revendications précédentes, **caractérisé en ce que** la diminution du degré d'humidité d'un milieu est réalisée par son refroidissement.

6. Procédé selon au moins l'une quelconque des revendications précédentes, **caractérisé en ce que** la diminution du degré d'humidité est réalisée par au moins un dispositif de séchage qui est sélectionné parmi un groupe de dispositifs de séchage qui comprend de la zéolithe et des éléments de type analogue.

7. Procédé selon au moins l'une quelconque des revendications précédentes, **caractérisé en ce que** le dispositif de séchage peut être régénéré thermiquement.

8. Procédé selon la revendication 7, **caractérisé en ce que** la régénération thermique du dispositif de séchage est réalisée par un gaz chaud.

9. Procédé selon au moins l'une quelconque des revendications précédentes, **caractérisé en ce que** le gaz chaud est produit dans le postbrûleur de gaz anodique, essentiellement au cours de la postcombustion du gaz anodique contenant de l'hydrogène résiduel.

10. Procédé selon au moins l'une quelconque des revendications précédentes, **caractérisé en ce que** la première électrode est une anode, la deuxième électrode étant une cathode, et le milieu, dont le paramètre thermodynamique a été modifié, est dirigé sur la cathode.

11. Procédé selon au moins l'une quelconque des revendications précédentes, **caractérisé en ce que** la pile à combustible est une pile à combustible à oxyde solide - *Solid Oxide Fuel Cell (SOFC)*.

12. Dispositif de fonctionnement d'au moins une pile à combustible à haute température, où la pile à combustible au moins au nombre de un présente une plaque d'interconnexion et au moins une première et une deuxième électrodes, et est alimentée par au moins un premier milieu contenant au moins un combustible et par au moins un deuxième milieu contenant au moins de l'air ambiant, **caractérisé en ce que** le dispositif présente au moins un dispositif de séchage qui déclenche un séchage d'au moins l'un des milieux.

13. Dispositif selon la revendication 12, **caractérisé en ce que** le convertisseur d'énergie présente au moins une pile à combustible, de préférence une multiplicité de piles à combustible.

14. Dispositif selon l'une quelconque des revendications précédentes, **caractérisé en ce que** le dispositif de séchage peut être régénéré thermiquement.

15. Dispositif selon l'une quelconque des revendications précédentes, **caractérisé en ce que** la régénération thermique est réalisée par un gaz chaud.

16. Dispositif selon l'une quelconque des revendications précédentes, **caractérisé en ce que** le gaz chaud est produit dans le postbrûleur de gaz anodique, essentiellement au cours de la postcombustion du gaz anodique contenant de l'hydrogène résiduel.

17. Dispositif selon au moins l'une quelconque des revendications précédentes, **caractérisé en ce que** le dispositif de séchage présente au moins une substance séchant le milieu.

18. Dispositif selon au moins l'une quelconque des revendications précédentes, **caractérisé en ce que** le dispositif de séchage est l'évaporateur d'un système de climatisation, évaporateur par lequel le milieu est refroidi.

19. Dispositif selon au moins l'une quelconque des revendications précédentes, **caractérisé en ce que** les plaques d'interconnexion sont fabriquées dans un matériau qui comporte des aciers spéciaux ferritiques.

20. Dispositif selon au moins l'une quelconque des revendications précédentes, **caractérisé en ce que** les plaques d'interconnexion sont fabriquées dans un matériau qui contient du chrome (Cr).

21. Dispositif selon au moins l'une quelconque des revendications précédentes, **caractérisé en ce que** le dispositif présente un dispositif de combustion monté en aval du convertisseur d'énergie.

22. Dispositif selon au moins l'une quelconque des revendications précédentes, **caractérisé en ce que** le convertisseur d'énergie présente une anode et une cathode, et un reformeur est monté en amont de l'anode.

23. Dispositif selon au moins l'une quelconque des revendications précédentes, **caractérisé en ce qu'**il est prévu au moins un dispositif servant à l'échange de chaleur.

24. Dispositif selon au moins l'une quelconque des revendications précédentes, **caractérisé en ce que** le dispositif servant à l'échange de chaleur est un échangeur de chaleur de gaz d'échappement.
